# EUROPEAN PATENT APPLICATION

(11) **EP 4 550 710 A1**
(43) Date of publication of application: **07.05.2025**
(21) Application number: 23207484.9
(22) Date of filing: 02.11.2023
(51) Int. Cl.: H04L 5/00, H04W 52/00, H04W 72/00, H04W 76/00

(54) **USER EQUIPMENT AND METHOD FOR USER EQUIPMENT**

(71) Applicant: Panasonic Intellectual Property Corporation of America, Torrance, CA 90504 (US)
(72) Inventor: LI, Hongchao, 63225 Langen (DE); SUZUKI, Hidetoshi, Osaka, 571-8501 (JP); YAMAMOTO, Tetsuya, Osaka, 571-8501 (JP)
(74) Representative: Grünecker Patent- und Rechtsanwälte PartG mbB

(57) **Abstract**

Provided are a user equipment, UE, comprising a transceiver and circuitry. The circuitry, in operation, when the UE is configured with at least one discontinuous reception, DRX, including non-active periods, performs a first determination as to whether a first uplink control information, UCI, is to be multiplexed with at least one second UCI and/or on a physical uplink shared channel, PUSCH, to form a multiplexed signal. Depending on a result of the first determination, the circuitry performs a second determination as to whether the first UCI is to be omitted before multiplexing, or as to whether transmission of the multiplexed signal is to be omitted, based on at least one of a timing relationship between resources dedicated to a transmission of the first UCI before multiplexing and the non-active periods, and a timing relationship between resources dedicated to a transmission of the multiplexed signal and the non-active periods. The circuitry further performs the multiplexing to form the multiplexed signal according to results of the first determination and the second determination, and causes the transceiver to transmit the multiplexed signal according to the result of the second determination.

## Description

### BACKGROUND

### 1. Technical field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitating efficient operation of the communication system as well as particular devices pertaining to the system.

### SUMMARY

One non-limiting and exemplary embodiment facilitates transmission of uplink control information, UCI, multiplexed with at least one other UCI and/or on a physical uplink shared channel, PUSCH, in the framework of a discontinuous reception, DRX.

In an embodiment, a user equipment, UE, comprises a transceiver and circuitry. The circuitry, in operation, when the UE is configured with at least one discontinuous reception, DRX, including non-active periods, performs a first determination as to whether a first uplink control information, UCI, is to be multiplexed with at least one second UCI and/or on a physical uplink shared channel, PUSCH, to form a multiplexed signal. Further, depending on a result of the first determination, the circuitry performs a second determination as to whether the first UCI is to be omitted before multiplexing, or as to whether transmission of the multiplexed signal is to be omitted, based on at least one of a timing relationship between resources dedicated to a transmission of the first UCI before multiplexing and the non-active periods, and a timing relationship between resources dedicated to a transmission of the multiplexed signal and the non-active periods. The circuitry performs the multiplexing to form the multiplexed signal according to results of the first determination and the second determination and causes the transceiver to transmit the multiplexed signal according to the result of the second determination.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming;
- **Fig. 6**: is a block diagram of a communication system including a user equipment, UE, and a base station with their respective structure;
- **Fig. 7a**: is a block diagram illustrating a functional structure of the circuitry at the user equipment side;
- **Fig. 7b**: is a block diagram illustrating functional structure of the circuitry at the base station side;
- **Fig. 8a**: illustrates the omission of a first UCI in a case where resources dedicated to the transmission of the first UCI before multiplexing overlap with a non-active period of a Cell DRX according to an embodiment;
- **Fig. 8b**: illustrates the omission a first UCI in a case where the resources dedicated to the transmission said first UCI before multiplexing overlaps a non-active period of Cell DRX according to an embodiment;
- **Fig. 8c**: illustrates a situation where UCls are multiplexed irrespective of the timing relationship between the resources dedicated for transmission of the UCls before multiplexing and non-active periods;
- **Fig. 8d**: illustrates a situation where UCls are multiplexed on a PUSCH irrespective of the timing relationship between the resources dedicated for transmission of the UCls before multiplexing and non-active periods;
- **Fig. 9**: is a flowchart of a process performed by a UE according to a first embodiment;
- **Fig. 10**: illustrates a determination of a first symbol after a UCI is omitted;
- **Fig. 11**: is a flowchart of a process performed by a UE according to a second embodiment;
- **Figs. 12a to 12d**: illustrate situations where the transmission of a multiplexed signal is not performed in cases where a timing relationship between resources dedicated to the transmission of the multiplexed signal and non-active periods indicates that said resources overlap a non-active period of a Cell DRX;
- **Figs. 13a to 13d**: illustrate situations where the transmission of a multiplexed signal is performed in cases where a timing relationship between resources dedicated to the transmission of the multiplexed signal and non-active periods indicates that said resources do not overlap a non-active period of a Cell DRX;
- **Fig. 14**: is a flowchart illustrating a process performed by a UE according to a third embodiment;
- **Fig. 15**: is a flowchart illustrating a process performed by a UE according to a fourth embodiment;
- **Figs. 16a and 16b**: illustrate situations where a UE is configured with a Cell DRX and a C-DRX, exhibiting respective active periods and non-active periods wherein the non-active period to be used for determinations is formed by the non-active period of the Cell DRX and the non-active periods of the C-DRX; and
- **Fig. 17**: illustrates a situation where a UE is configured with a Cell DRX and a C-DRX, exhibiting respective active periods and non-active periods, wherein the non-active period to be used for determinations is formed solely by the non-active period of the C-DRX.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

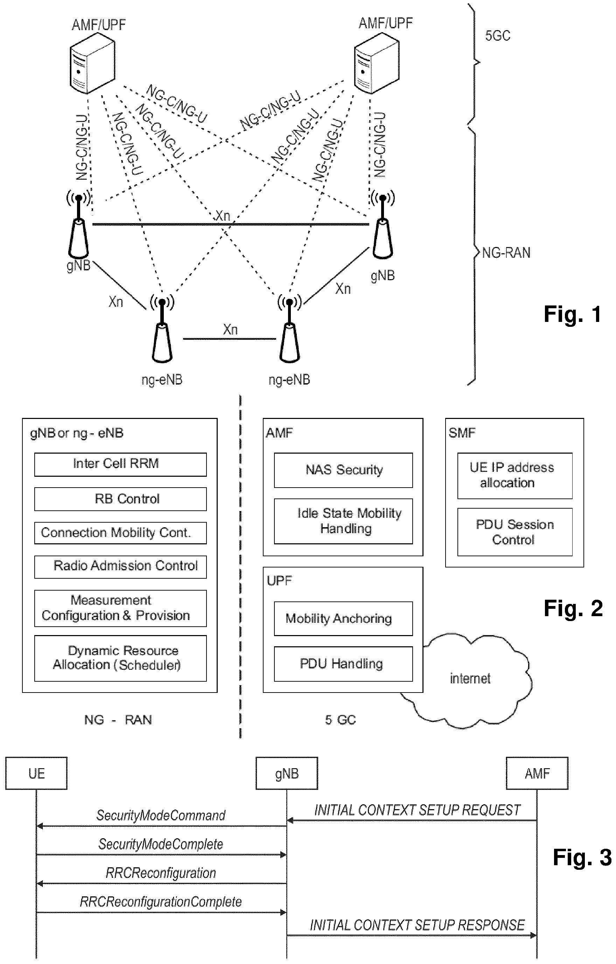

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.2.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

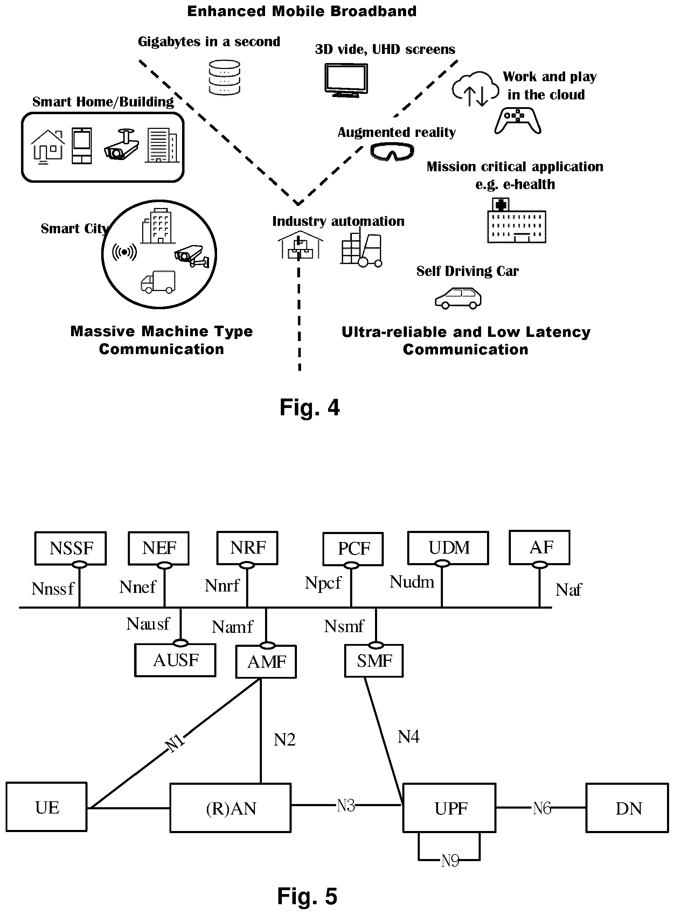

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. **Fig. 4** illustrates some examples of envisioned usage scenarios for IMT for 2020 and beyond (see e.g. ITU-R M.2083 **Fig. 2**).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB).

Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to **Fig. 3**. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in **Fig. 4**, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as IoT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a scheduling node or network node, e.g. forming a part of the network for providing services to terminals. In particular, a base station may provide wireless access to terminals. Communication between the terminal and the base station is typically standardized and may be defined by different layers, such as PHY, MAC, RRC etc. In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term base station or radio base station here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

### Frequency Bands

The present disclosure may be applied to any of a licensed band and an unlicensed band.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Uplink control information - UCI

In the context of LTE and 5G NR, UCI stands for "Uplink Control Information." UCI plays a fundamental role in managing and controlling the uplink communication from user devices (UEs) to the network.

Wireless communication networks like 5G NR rely on control signaling to manage various aspects of communication, such as resource allocation, power control, and beamforming. UCI is a specific type of control signaling that is transmitted by UEs to convey important information to the network.

UCI is transmitted on the uplink, which is the communication path from UEs to the base station (gNB in 5G NR terminology). This is important because it allows the network to receive feedback and instructions from UEs, enabling efficient resource management.

PUCCH is an uplink physical channel that carries UCI (Uplink Control Information). As DCI (Downlink Control Information) is carried by PDCCH, UCI is carried by PUCCH. A big difference between DCI and UCI is that UCI can be carried either by PUCCH or PUSCH depending on situation whereas DCI can be carried only by PDCCH (not by PDSCH in any case).

The contents of UCI is as follows. Not all of these are carried by single UCI. Depending on situation, sometimes only CSI is carried, sometimes ACK/NACK only, sometimes SR only and sometimes CSI & ACK/NACK etc. These three elements are combined in various way and reported to a Network via uplink physical channel: PUCCH or PUSCH.
- ACK/NACK
- Scheduling Request (SR)
- CSI

### UCI multiplexing

Uplink control information (UCI) messages consist of a hybrid automatic repeat request acknowledgment (HARQ-ACK), channel state information (CSI), and a scheduling request (SR). These UCI messages are encoded and transmitted through the physical uplink control channel (PUCCH) or are multiplexed on the PUSCH. This is called UCI multiplexing on PUSCH.

UCI multiplexing is the process of combining or multiplexing different types of UCI into a single uplink transmission. This is achieved through the use of specific resource blocks and signaling formats. The decision of whether to multiplex different types of UCls and how to prioritize them is typically determined by the UE's built-in logic, the current network configuration, and the specific requirements of the network and applications in use. The UE and the gNB communicate through various control channels and signaling procedures to coordinate the transmission of UCls effectively while optimizing resource utilization and network performance.

UCI multiplexing on PUSCH involves combining one or more types of UCI into a single transmission on the PUSCH resource. This is achieved by mapping different UCI types to specific resource blocks or symbols within the PUSCH. The UE communicates with the gNB to coordinate the transmission of UCI on the PUSCH effectively. This coordination involves the use of control channels, uplink grants, and signaling procedures to ensure that UCI is multiplexed efficiently, optimizing resource utilization and network performance. The exact procedures and parameters may vary depending on the specific network configuration and the UCI types involved.

Transmitting multiple UCI separately would result in overhead and inefficiency. Multiplexing helps reduce this overhead, allowing for more efficient use of uplink resources. By transmitting multiple types of UCI in a single transmission, latency is reduced because the user device can transmit all the necessary control information at once. Further, multiplexing enables the simultaneous transmission of different types of UCI, improving resource utilization and network efficiency.

### Scheduling request - SR

Scheduling requests in wireless communication networks like LTE and 5G NR are a mechanism that allows user devices (UEs) to request network resources for transmitting data. They are a part of the dynamic resource allocation process and play a crucial role in optimizing the utilization of available resources.

The SR is triggered when UE is in uplink sync with the base station and it is not having an uplink (PUSCH/PUCCH) resource allocated for transmission of data. The SR is used for requesting UL-SCH resources (up-link grant for new transmission on PUCCH channel. The base station replies the UE with an uplink grant in DCI 0_0 or DCI 0_1 messages on PDCCH channel.

That is, an SR is employed by the UE to request allocation of uplink resources when having data ready for transmission but no resource grant for use of the PUSCH.

Exemplary details on SRs may be found, for example, in 3GPP TS 38.213 V18.0.0, dated September 2023: "3rd Generation Partnership Project; Technical Specification Group Radio Access Network; NR; Physical layer procedures for control (Release 18)", section 9.2.4, and 3GPP TS 38.321 V17.6.0 dated September 2023: "3rd Generation Partnership Project; Technical Specification Group Radio Access Network; NR; Medium Access Control (MAC) protocol specification (Release 17)".

### Reference Signals

In the present disclosure, the reference signals are signals known to both a base station and a UE and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Sounding reference signal - SRS

A Sounding Reference Signal (SRS) is a signal used in wireless communication systems, such as 4G LTE and 5G NR, to enable the network to obtain information about the radio channel quality from the user devices (UEs) in the cell. It serves as a reference for channel quality estimation, enabling the network to adjust transmission parameters for optimized communication.

The primary purpose of SRS is to provide the network with information about the channel conditions experienced by the UEs. This information may be used by the network to optimize the transmission to each UE and to perform beamforming and spatial processing in multi-antenna systems.

SRS allows the network to estimate the quality of the uplink channel from each UE to the base station. This information helps in adapting modulation and coding schemes, power control, and other transmission parameters. In multi-antenna systems, SRS assists in determining the optimal beamforming weights for data transmission, improving signal quality and coverage.

SRS information can further be used to mitigate interference and improve the overall performance of the network.

SRS transmission parameters are configured by the network and are specific to each UE. These parameters include the frequency, time, and duration of SRS transmissions. The configuration is based on the network's needs and can vary depending on factors such as the network load, device mobility, and the service requirements.

SRS can be configured to be transmitted on specific subcarriers (frequency) and within certain time intervals (time). This allows the network to collect channel quality information at the desired locations and times.

SRS can be transmitted in different modes, including periodic and aperiodic modes. In periodic mode, SRS is transmitted at regular intervals as configured by the network. It provides continuous feedback on channel conditions, which is beneficial for maintaining optimal performance. In aperiodic mode, a UE can also transmit SRS in response to specific events or commands from the network. This provides more flexible feedback when the channel quality changes rapidly.

UEs transmit SRS according to their configuration. The network receives and processes the SRS reports to make adjustments for optimizing the communication with the UE, which can include adjusting transmission power, modulation, coding, and antenna beamforming.

### Channel State Information - Reference Signal (CSI-RS)

CSI-RS (Channel State Information Reference Signal) is a signal used in LTE and 5G NR to measure the quality of the wireless channel between the UE and the base station. It may be transmitted periodically by the base station on specific resource elements (resources) in the frequency domain, and the UE uses the received CSI-RS to estimate channel quality, which can be used for beamforming and other techniques. The UE can also use CSI-RS for feedback to the base station, indicating the modulation and coding scheme that can be supported on the current channel. CSI-RS is a component to provide high data rates and reliable communication.

### CSI-RS resource set group

The CSI-RS resource set group is a concept that refers to a group of CSI-RS resource sets with similar transmission characteristics. CSI-RS resource set groups may be used to optimize the transmission efficiency and reduce the overhead associated with individualized control signaling. It may allow the base station to transmit a single CSI-RS resource set for multiple antennas or transmission points, thereby reducing the number of control signals required for beamforming and other transmission optimization techniques.

The CSI-RS resource set group is characterized by a unique identifier, known as the CSI-RS Configuration Index (CRI). The CRI is used by the UE to identify the CSI-RS resource set group and the associated transmission characteristics. The CSI-RS resource set group can be used for a variety of transmission parameters, including beamforming, channel quality measurement, and handover.

### CSI reporting

Channel State Information is a general term for information describing characteristics of the radio channel.

CSI reporting, e.g. in LTE or 5G NR, is a mechanism by which the UE may provide feedback to the base station about the quality of the radio channel. For this purpose, the UE estimates the channel quality based on the reference signals sent by the base station, and reports this information to the base station.

CSI reporting in 5G NR is more advanced than in LTE and includes a variety of feedback types and reporting configurations. The UE estimates the channel quality based on the reference signals, including the CSI-RS and the DMRS (Demodulation Reference Signal), sent by the base station. The UE then reports this information to the base station using one or more feedback types, such as:
- Periodic CSI feedback: the UE sends CSI feedback at regular intervals specified by the base station.
- Aperiodic CSI feedback: the UE sends CSI feedback when the channel conditions change significantly.
- Semi-persistent CSI feedback: the UE sends CSI feedback periodically with a certain offset, allowing the base station to anticipate when feedback will be received.

The feedback types can be configured with different reporting configurations, which include the number of bits used to encode the feedback, the frequency of feedback reporting, and the aggregation of multiple subcarriers or antennas.

The base station may use the CSI feedback to adapt the transmission parameters, such as the modulation and coding scheme, to the current channel conditions. CSI reporting is a mechanism for achieving high data rates and efficient use of the radio spectrum in 5G NR.

### HARQ-ACK

HARQ-ACK, or Hybrid Automatic Repeat Request Acknowledgment, is a concept in wireless communication, particularly in 4G LTE and 5G NR (New Radio) systems. HARQ-ACK is used to manage the transmission of data between the user device (UE) and the network, ensuring data reliability and efficient use of communication resources.

HARQ-ACK is used to acknowledge the successful reception of data. When the network (eNodeB in LTE or gNodeB in 5G) sends data to a user device, it expects an acknowledgment that the data was received correctly. The acknowledgment indicates whether the data should be considered successfully received or if it needs to be retransmitted. If the UE detects errors in the received data, it sends a negative acknowledgment (NACK) to request the retransmission of the data. This ensures that data errors are corrected for reliable communication.

The network (eNodeB or gNodeB) sends data to the user device (UE) over the downlink channel. The UE attempts to decode and receive the data correctly. After receiving the data, the UE performs error detection and checks whether the data was received correctly. If the data is error-free, the UE sends a positive acknowledgment (ACK) to the network to confirm successful reception. If errors are detected, it sends a negative acknowledgment (NACK) to request retransmission. If the UE sends a NACK, the network may schedule a retransmission of the data. The process continues until the UE successfully receives the data or until a predefined maximum number of transmission attempts is reached.

There are two main types of HARQ-ACK feedback: Acknowledgment (ACK), which is sent by the UE to confirm successful reception of the data. The network does not need to retransmit the data in response to an ACK, and Negative Acknowledgment (NACK), which is sent by the UE to indicate that errors were detected in the received data, and retransmission is needed.

When data is successfully received (ACK), it avoids unnecessary retransmissions, saving bandwidth and reducing latency. When errors are detected (NACK), the network can quickly retransmit the data, ensuring reliable communication. HARQ-ACK is adaptive, meaning it allows for several transmission attempts before concluding that the data cannot be successfully received. This adaptability improves the chances of successful data transmission under varying channel conditions.

Exemplary details on HARQ-ACK may be found, for example, in 3GPP 38.212 V18.0.0 dated September 2023: "3rd Generation Partnership Project; Technical Specification Group Radio Access Network; NR; Multiplexing and channel coding (Release 18)", sections 6.3.1.1 and 6.3.2.1.

### Discontinuous reception - DRX

In the context of 5G NR and LTE wireless communication standards, DRX (Discontinuous Reception) is a power-saving feature that helps extend the battery life of UEs by allowing them to periodically enter into a low-power or sleep mode.

DRX is used in LTE to save power for user devices when they are not actively communicating with the network. It is particularly important for extending the battery life of mobile devices. DRX works by allowing a device to periodically turn off its receiver for short durations. During these "off" periods or non-active periods, the device does not listen for incoming data, which conserves power. The device wakes up at predefined intervals to check for any pending data, and if there is data waiting, it powers on the receiver and receives the data. DRX parameters are typically configured by the network and can vary depending on the specific use case. The parameters include on-duration (time the receiver is on; active periods) and off-duration (time the receiver is off; non-active periods).

Similar to LTE, DRX in 5G NR is designed to save power for user devices while maintaining the ability to receive data when needed. It is a key feature for battery-efficient operation in 5G networks. 5G NR DRX operates in a manner similar to LTE, with the key difference being the flexibility and granularity it offers. 5G NR provides more configurable DRX parameters, allowing for finer control over the sleep and wake patterns of the device's receiver. In 5G NR, network operators have more flexibility in configuring DRX parameters. This includes the ability to set the on-duration (active period), off-duration (non-active period), and DRX cycles to better match the specific requirements of different applications and services.

Exemplary details on DRX can be found, for example, in 3GPP TS 38.304 V17.6.0 dated September 2023: "3rd Generation Partnership Project; Technical Specification Group Radio Access Network; NR; User Equipment (UE) procedures in Idle mode and RRC Inactive State (Release 17)", section 7.1.

### Cell DRX

Cell DRX, which stands for "Cell-Discontinuous Reception," is a power-saving feature used in the 4G LTE and 5G NR wireless communication standards. It allows UEs to reduce their power consumption by entering a low-power state when there is no data to receive from the network. A periodic Cell DRX (i.e., active and non-active periods) can be configured by a base station via UE-specific RRC signaling per serving cell, for example.

Cell DRX operates at the cell level, meaning it is a feature managed by the network cell (the base station) to control the behavior of UEs within its coverage area. The network configures the Cell DRX parameters for UEs. This includes specifying the DRX cycle and various timing parameters, including the duration of the on-state (active mode; active periods) and the off-state (non-active state; non-active periods). The network can page (send a message) to the device during the off-state to wake it up when there is incoming data or a need for communication. This minimizes power consumption during idle periods but ensures the device remains responsive to network commands.

The network can configure Cell DRX parameters to match the specific requirements of different use cases, ensuring an optimal balance between power savings and responsiveness. That is, by configuring the DRX cycle and timing parameters, the network can optimize power efficiency while ensuring devices remain responsive to network commands and incoming data.

### Connected mode DRX - C-DRX

Connected Mode DRX, C-DRX, is a power-saving feature used in wireless communication. It enables user devices to reduce their power consumption while staying connected to the network, primarily during data transmission and reception activities.

The primary purpose of Connected Mode DRX is to conserve power in user devices during active communication sessions. While traditional Discontinuous Reception (DRX) is used during idle or standby periods, Connected Mode DRX is designed to optimize power usage when a device is actively communicating with the network.

Connected Mode DRX, C-DRX, operates when a UE is in a connected state, meaning it is actively engaged in data transmission or reception with the network. The network may dynamically configure the C-DRX parameters for UEs during active connections. These parameters include the DRX cycle, inactivity timer, the On-Duration (active period) of the cycle and/or the Off-Duration (non-active period). The DRX cycle in Connected Mode may be shorter and more frequent compared to the idle state DRX. It defines the timing for the device to periodically switch between active (reception) and sleep (low-power) modes during an active connection. The inactivity timer is a parameter that defines how long the device will remain in the active mode after the last data transmission or reception. If there is no activity during this period, the device enters the sleep mode to save power. The network can dynamically adjust the C-DRX parameters based on the traffic pattern and the specific communication needs of the device. For example, if the device is engaged in an ongoing data session, the On-Duration (active period) may be extended to ensure responsiveness.

C-DRX may reduce the power consumption of user devices during active communication sessions, improving their overall energy efficiency. The feature balances power savings with network responsiveness. Devices can quickly wake up from the low-power state when there is data to transmit or receive, ensuring a seamless user experience. The network can adapt C-DRX parameters to suit different use cases, such as streaming video, web browsing, or voice calls. This customization ensures optimal power management during various types of connections.

By dynamically configuring C-DRX parameters, the network can balance power efficiency with network responsiveness, ensuring that devices remain responsive during data transmission and reception while conserving power during idle periods.

Exemplary details on C-DRX may be found, for example, in 3GPP TS 38.321 V17.6.0 dated September 2023: "3rd Generation Partnership Project; Technical Specification Group Radio Access Network; NR; Medium Access Control (MAC) protocol specification (Release 17)", section 5.7.

### Transmission of signals in the framework of a DRX configuration

According to current RAN1/RAN2 agreement, certain channels/signals may not be transmitted during non-active periods of a Cell DRX. In other words, UCls and/or data on a PUSCH may not be transmitted during non-active periods, wherein said UCIs/data include contents from one of the following: a scheduling request (SR), data on a configured grant (CG) PUSCH, periodic or semi-persistent CSI report, and periodic or semi-persistent SRS.

On the other hand, certain channels/signals are not affected by the DRX configuration and, in other words, may be transmitted by a UE also during non-active periods of the Cell DRX configuration. Specifically, said channels/signals that are transmitted during non-active periods of a Cell DRX include an SRS for positioning, HARQ-ACK of a Semi-Persistent Scheduling (SPS), PDSCH, and/or HARQ-ACK of a DCI format without scheduling a PDSCH. Further, signals/channels that might be transmitted even during non-active periods of a Cell DRX may include aperiodic CSI reports on a PUSCH (e.g. that are triggered by PDCCH), which partially or fully overlap a non-active period of a Cell DRX, HARQ-ACK of a dynamically scheduled PDSCH, which partially or fully overlaps with a non-active period of a Cell DRX, and dynamically scheduled PUSCH (e.g. scheduled by PDCCH), which partially or fully overlaps with a non-active period of a Cell DRX.

However, the following channels/signals may or may not be transmitted during a non-active period of a Cell DRX: a scheduling request (SR), data on a configured grant (CG) PUSCH, periodic or semi-persistent CSI report, and periodic or semi-persistent SRS, wherein said signal/channel partially overlaps a non-active period of Cell DRX; UCI multiplexed on a PUCCH, wherein respective PUCCH resources before and/or after multiplexing overlaps with a non-active period of Cell DRX and at least one of multiplexed UCls relates to a scheduling request (SR), data on a configured grant (CG) PUSCH, periodic or demi-persistent CSI report; and UCls multiplexed on a PUSCH, wherein respective PUCCH and/or PUSCH resources overlap a non-active period of Cell DRX and at least one of multiplexed UCls relates to a scheduling request (SR), data on a configured grant (CG) PUSCH, periodic or semi-persistent CSI report.

Hence, if a UE transmits a UCI multiplexed with another UCI and/or on a PUSCH, but the network (e.g. eNB or gNB) does not expect a transmission of the multiplexed signal, unnecessary power consumption and processing load is caused in the UE. On the other hand, if the UE does not transmit the multiplexed signal or selectively transmits some UCls, the network (e.g. eNB or gNB) would be required to blindly detect multiple possibilities, causing a negative effect on network stability and aligned operation of the network (e.g. eNB or gNB) and the UE.

The present disclosure addresses said channels/signals that may or may not be transmitted during a non-active period of a Cell DRX. However, the present disclosure is not limited to a Cell DRX configuration, but may be applied to any DRX with which a UE may be configured.

### Embodiments

The present disclosure addresses a situation where a UE 100 is configured with a Cell DRX and one or more UCI is to be multiplexed on a PUCCH or a PUSCH. The UE 100 determines that a UCI is dropped/omitted before multiplexing or that a multiplexed signal including said UCI is not generated and/or transmitted based on whether a UCI overlaps with a non-active period of the Cell DRX before multiplexing, whether a utilized PUCCH or PUSCH resource after multiplexing overlaps with a non-active period of Cell DRX, whether none of the UCI/PUSCH to be multiplexed should be free of an impact of a Cell DRX operation around the boundary between active periods and non-active periods, whether none of the UCI/PUSCH to be multiplexed should not be affected by Cell DRX operation during the non-active period, whether any of the UCI/PUSCH to be multiplexed would be impacted by the Cell DRX operation during a non-active period, and whether the UCI is outside an active period of a C-DRX, if configured, and/or a Cell DRX active period. However, the non-active period is not limited to a non-active period of a Cell DRX or a C-DRX, but may relate to a non-active period of any DRX, including non-active periods of a plurality of DRXs.

In the following, UEs, base stations, and procedures will be described for the new radio access technology envisioned for the 5G mobile communication systems, but which may also be used in LTE mobile communication systems, 6G mobile communication systems and other wireless or wired communication system. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the UE and the base station is typically standardized and may be defined by different layers, such as PHY, MAC, RRC etc. (see above background discussion).

The present disclosure relates to a UE, a base station and methods of a UE and a base station that address issues related to CSI transmissions in the framework of a DRX configuration.

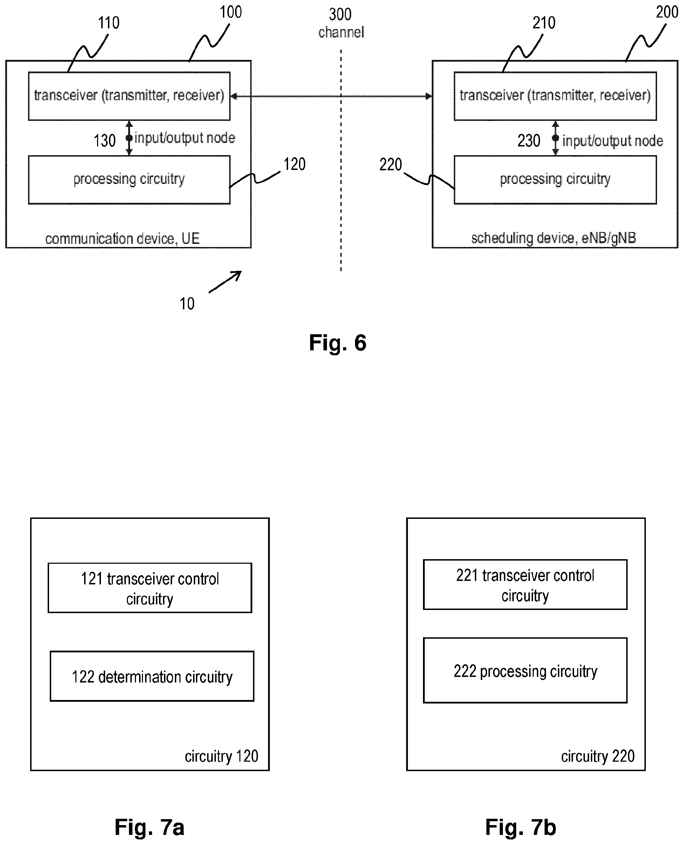

Fig. 6 illustrates a general, simplified and exemplary block diagram of a user equipment 100 (also termed communication device) and a base station 200 which is here exemplarily assumed to be a scheduling device like an eNB or gNB (network node). However, in general, a scheduling device may also be a terminal in case of a sidelink connection between two terminals. Moreover, in particular with respect to the use cases of URLLC; eMBB, and mMTC, the communication device 100 may also be a sensor device, a wearable device, or a connected vehicle, or a controller of an automated machine in an industrial factory. Further, a communication device 200 may be able to function as a relay between base station and another communication device (e.g. the disclosure is not limited to communication "terminals" or user "terminals").

The UE 100 and the base station 200 (eNB/gNB) are communicating with each other over a (wireless) physical channel 300 respectively using their transceivers 110 (UE side) and 210 (base station side). Together, the base station 200 and the UE 100 form the communication system 10. The communication system 10 may further include other entities such as those shown in Fig. 1.

The UE 100 may comprise the transceiver 110 and a (processing) circuitry 120, and the scheduling device 200 may comprise the transceiver 210 and a (processing) circuitry 220. The transceiver 110, 210 in turn may comprise and/or function as a receiver and/or a transmitter. In this disclosure, in other words, the term "transceiver" is used for hardware and software components that allow the UE 100, or, respectively base station 200 to transmit and/or receive radio signals over a wireless channel 300. Accordingly, a transceiver corresponds to a receiver, a transmitter, or a combination of receiver and transmitter. Typically, a base station 200 and a UE 100 are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, etc.

As shown in **Fig. 6**, in some embodiments, the user equipment, UE, 100, comprises a transceiver 110 and circuitry 120. The circuitry 120, in operation, when the UE 100 is configured with at least one discontinuous reception, DRX, including non-active periods, performs a first determination as to whether a first uplink control information, UCI, is to be multiplexed with at least one second UCI and/or on a physical uplink shared channel, PUSCH, to form a multiplexed signal. Depending on a result of the first determination, the circuitry 120 performs a second determination as to whether the first UCI is to be omitted before multiplexing, or as to whether transmission of the multiplexed signal is to be omitted, based on at least one of a timing relationship between resources dedicated to a transmission of the first UCI before multiplexing and the non-active periods, and a timing relationship between resources dedicated to a transmission of the multiplexed signal and the non-active periods. The circuitry 120 further performs the multiplexing to form the multiplexed signal according to results of the first determination and the second determination, and causes the transceiver 110 to transmit the multiplexed signal according to the result of the second determination.

For example, the circuitry 120, in operation, performs the second determination if, as the result of the first determination, the first UCI is to be multiplexed with the at least one second UCI and/or on the PUSCH to form the multiplexed signal.

It is noted that the UE 100 may be configured with only one DRX configuration or more than one, e.g. two or more, DRX configurations. The DRX configurations may include any one of a regular DRX configuration (idle mode DRX), a Cell DRX configuration or a Connected Mode DRX configuration (C-DRX configuration). The active times (ON-periods) and the non-active times (OFF-periods) may be according to the respective configuration and/or may be dynamically adjusted, wherein the base station (gNB, for example) indicates parameters defining the cycle and/or durations of active and non-active periods in a dynamical manner through signaling. In other words, the non-active periods of the DRX may not necessarily be solely according to the configuration.

A timing relationship may be a relationship between temporal locations of resources and a certain period like the non-active period. A timing relationship may indicate that said resources temporally overlap with the period (including a case where the temporal locations of the resources are entirely included in the period; i.e. the timing relationship may indicate that the temporal locations of the resources at least partially overlap with the period), or that temporal locations of said resources do not overlap with the period, i.e. are located entirely outside the period.

When a first UCI is omitted before multiplexing, the multiplexing is performed, wherein said UCI is not multiplexed with another UCI and/or on a PUSCH. In other words, multiplexing may still be performed, by multiplexing other UCls with each other and/or on a PUSCH. However, if the first UCI is to be multiplexed with a single other UCI or on a PUSCH only, the multiplexing may not be performed, and, in this case, the signal called "multiplexed signal" relates to the other UCI or the PUSCH only.

The multiplexed signal may be transmitted according to the result of the second determination in a sense that if it is determined that the multiplexed signal is not to be transmitted, the transmission is omitted/not performed. Further, if it is determined, in the second determination, that the multiplexed signal is not to be transmitted, multiplexing to form the multiplexed signal according to the result of the first determination and the second determination may be interpreted in that multiplexing is omitted/not performed, since transmission of the multiplexed signal resulting from said multiplexing would not be performed. Hence, the multiplexing may be omitted in this case, resulting in a reduced power consumption and/or a reduced processing amount.

Resources dedicated to transmission of a UCI before multiplexing relates to resources calculated or determined by the UE 100 that would be used in a case where the UCI is not multiplexed with another UCI and/or on a PUSCH.

The first UCI may be a UCI carrying at least one of a scheduling request, SR, and a periodic or semi-persistent CSI report or any other content that would cause the UCI not to be transmitted when respective resources overlap with a non-active period - if no multiplexing was to be performed.

**Fig. 7a** shows a functional structure of the circuitry 120. In particular, it includes a transceiver control circuitry 121. The transceiver control circuitry 121, in operation, controls the transceiver 110 to perform the operations described. Further, the circuitry 120 includes determination circuitry 122 which, in operation, performs the operations of the circuitry 120 as described.

**Fig. 7b** shows a functional structure of the circuitry 220. In particular, circuitry 220 includes a transceiver control circuitry 221. The transceiver control circuitry 221, in operation, controls the transceiver 210. Further, the circuitry 220 includes processing circuitry 222 which, in operation, performs operations of the circuitry 220.

The circuitries 120, 220 may be one or more pieces of hardware such as one or more processors or any LSIs. Between the transceiver 110, 210 and the circuitry 120, 220 there is an input/output point (or node) 130, 230 over which the processing circuitry 120, 220, when in operation, can control the transceiver 110, 210, i.e. control the receiver and/or the transmitter and exchange reception/transmission data. The transceiver 110, 210, as the transmitter and receiver, may include the RF (radio frequency) front including one or more antennas, amplifiers, RF modulators/demodulators and the like. The circuitry 120, 220 may implement control tasks such as controlling the transceiver 110, 210 to transmit user data and control data provided by the circuitry 120, 220 and/or receive user data and control data that is further processed by the circuitry 120, 220. The circuitry 120, 220 may also be responsible for performing other processes such as determining, deciding, calculating, measuring, etc. The transmitter may be responsible for performing the process of transmitting and other processes related thereto. The receiver may be responsible for performing the process of receiving and other processes related thereto.

It is noted that the circuitries 120, 220 may be a general processing circuitry including one or more processors which may execute code instructions stored in a memory (which may be also part of the circuitry 120, 220) and which may include portions of the code instructions corresponding to the functionality described above with reference to respective circuitry. The functionality may be provided by hardware adaption and/or by software. The present disclosure is not limited to any particular circuitry and embodiments of the disclosure may include dedicated or programmable hardware or general purpose hardware or any combination thereof.

It is further noted that any of the steps/operations described below may be performed or controlled by the circuitry 120 (on the UE 100 side) and/or the circuitry 220 (on the base station 200 side). In particular, in the further description, the details and embodiments apply to each of the UE 100, the base station 200 and the methods unless explicit statement or context indicates otherwise.

It is further noted that these and other aspects may be combined with/included in the following specific embodiments of the present disclosure.

### First embodiment

According to a first embodiment, the UE 100 comprises a transceiver 110 and circuitry 120. The circuitry 120, in operation, when the UE 100 is configured with at least one discontinuous reception, DRX, including non-active periods, performs a first determination as to whether a first uplink control information, UCI, is to be multiplexed with at least one second UCI and/or on a physical uplink shared channel, PUSCH, to form a multiplexed signal. Further, depending on a result of the first determination, the circuitry 120 performs a second determination as to whether the first UCI is to be omitted before multiplexing, based on a timing relationship between resources dedicated to a transmission of the first UCI before multiplexing and the non-active periods. Then, the circuitry 120 performs the multiplexing to form the multiplexed signal according to results of the first determination and the second determination, and causes the transceiver 110 to transmit the multiplexed signal according to a result of the second determination.

For example, the circuitry 120, in operation, determines, in the second determination, that the first UCI is to be omitted before multiplexing if the timing relationship between the resources dedicated to the transmission of the first UCI before multiplexing indicates that said resources overlap with a non-active period.

In other words, when UCI(s) overlapping with a non-active period of a DRX are to be multiplexed, the UE 100 drops/omits a UCI before multiplexing that overlaps with a non-active period of a DRX. The UCI(s) dropped/omitted before multiplexing may be UCI(s) carrying at least one of a scheduling request, SR, and a periodic or semi-persistent CSI report or any other content that would cause the UCI not to be transmitted when respective resources overlap with a non-active period - if no multiplexing was to be performed.

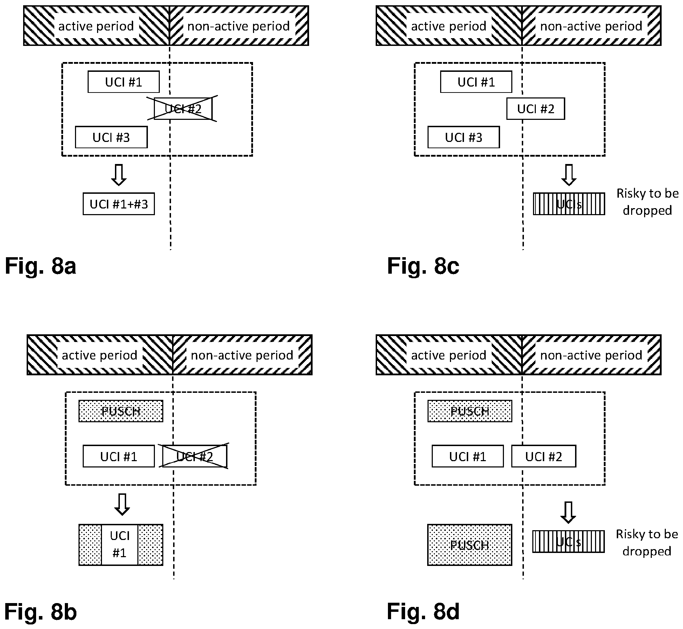

**Fig. 8a** exemplarily illustrates the omission of a first UCI in a case where resources dedicated to the transmission of the first UCI before multiplexing overlap with a non-active period of a Cell DRX. Specifically, in the example illustrated in the figure, the resources dedicated to the transmission UCI #2 before multiplexing overlap with a non-active period of a Cell DRX, whereas the resources of UCls #1 and #3 before multiplexing are temporarily located entirely in the active period of the Cell DRX cycle.

That is, in the illustrated example, UCI #2 represent a first UCI and UCls #1 and #3 represent second UCls. In this case, the UE 100 (e.g. the circuitry 120) determines that UCls #1 to #3 are to be multiplexed. On the other hand, since the resources of UCI #2 before multiplexing temporarily overlap with the non-active period, UCI #2 is dropped/omitted before generating the multiplexed signal.

Accordingly, in this example, the circuitry 120 determines that UCI #2 is to be omitted before multiplexing, and that only UCls #1 and #3 that do not overlap with the non-active period are multiplexed, to form the multiplexed signal, and transmitted.

**Fig. 8b** exemplarily illustrates the omission a first UCI before multiplexing on a PUSCH in a case where the resources dedicated to the transmission of said first UCI before multiplexing overlap a non-active period of Cell DRX. Specifically, in the illustrated example, the resources dedicated to transmission of UCI #2 before multiplexing overlaps the non-active period and, hence, UCI #2 is dropped/omitted before multiplexing. Therefore, UCI #2 represents a first UCI whose resources dedicated for transmission before multiplexing exhibit a timing relationship with the non-active period that indicates that the first UCI (UCI #2) overlaps the non-active period.

Accordingly, UCI #2 (i.e. the first UCI) is omitted before multiplexing UCI #1 (i.e. a second UCI) on the PUSCH. That is, the second UCI (UCI #1) is multiplexed on the PUSCH and transmitted by the transceiver 110.

On the other hand, in a case where the first UCI were not omitted, although the resources dedicated for transmission of the first UCI before multiplexing overlap the non-active period, estimated/determined resources of the multiplexed signal may be located within or overlap with the non-active period. In this case, whether or not said multiplexed signal is actually transmitted, may depend on a configuration of the UE 100 and/or other factors (cf. embodiment 3). That is, when a first UCI whose dedicated resources for transmission before multiplexing overlap a non-active period is not omitted, there is a risk that the multiplexed signal is not transmitted, depending on its timing relationship with the non-active period.

As an example, **Fig. 8c** illustrates a situation where three UCls #1 to #3 are multiplexed irrespective of the timing relationship between the resources dedicated for transmission of the UCls before multiplexing and non-active periods, resulting in a multiplexed signal ("UCls") whose estimated/determined resources are fully included in the non-active period.

Further, as illustrated in the example of **Fig. 8d**, resources dedicated to the transmission of a first UCI (UCI #2) before multiplexing are located so as to overlap the non-active period. Further, a second UCI (UCI #1) as well as resources of a PUSCH are located within the active period. In a case where the UCls are to be multiplexed, the estimated/determined resources for transmission of the resulting multiplexed ("UCls") signal may be located within the non-active period, possibly resulting in said multiplexed signal not being transmitted.

Thus, according to the embodiment, according to which a first UCI whose dedicated resources for transmission before multiplexing is dropped/omitted, allows for keeping/transmitting all UCls, whose timing relationship with the non-active periods indicates that respective resources do not overlap a non-active period. Hence, the UCls within the active periods are kept, without the risk that a multiplexed signal including UCls overlaps the non-active period, possibly resulting in the multiplexed signal not being transmitted, as illustrated in Figs. 8c and 8d.

Further, since UCls whose dedicated resources before multiplexing overlap a non-active period are omitted, the complexity of processing to be performed by the UE 100 is reduced, since less UCls need to be processed and multiplexed.

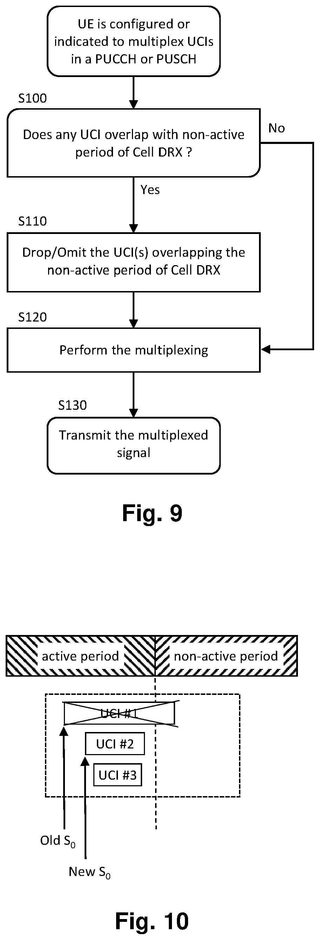

**Fig. 9** is a flowchart of a process performed by the UE 100 according to the first embodiment. The UE 100 is configured with or is indicated that UCls are to be multiplexed on a PUCCH or a PUSCH. That is, a UCI is to be multiplexed with at least one other UCI and/or on a PUSCH. In step S100, the circuitry 120 determines whether resources for transmission of any one of the UCls before multiplexing overlaps a non-active period. If so (Yes in step S100), said UCI whose resources for transmission before multiplexing overlap the non-active periods is a first UCI and, hence, is dropped/omitted in step S110 before multiplexing. In the subsequent step S120, the multiplexing is performed without the first UCI whose resources for transmission before multiplexing overlap the non-active period. On the other hand, when it is determined that no resource of a UCI overlaps a non-active period in step S100 (No in step S100), said UCI is not dropped and included in the multiplexing process of step S120. Subsequently, in step S130, the multiplexed signal resulting from the multiplexing procedure of step S120 is transmitted to a base station 200, for example.

### Variation

In a variation of the first embodiment, if the circuitry 120 determines that the first UCI is to be omitted before multiplexing, the circuitry 120, in operation, determines a first symbol of an earliest physical uplink control channel, PUCCH, or PUSCH after omitting of the first UCI, and further checks if a processing time of the multiplexing is sufficient by using the first symbol as a reference.

As specified, for example, in 3GPP TS 38.213 V.18.0.0 "3rd Generation Partnership Project; Technical Specification Group Radio Access Network; NR; Physical layer procedures for control (Release 18)" dated September 2023, section 9.2.5, a first symbol S₀ may be determined by the earliest PUCCH or PUSCH. That is, in a procedure for reporting multiple UCI types in a case where a UE 100 has resources for PUCCH transmissions or for PUCCH and PUSCH transmissions that overlap in time and each PUCCH transmission is over a single slot without repetitions, the UE 100 may expect a first symbol S₀ of the earliest PUCCH or PUSCH, among a group of overlapping PUCCHs and PUSCHs according to determined timeline conditions. In the present variation, said timeline conditions may be checked after determination that a first UCI is to be omitted.

The first Symbol S₀ represents a starting point used by the UE 100 to judge whether there is enough processing time between the first symbol S₀ and a last symbol of a corresponding PDCCH or PDSCH related to the multiplexed PUCCH or PUSCH.

After a first UCI is dropped/omitted before multiplexed, the first symbol S₀ may be determined without considering the dropped/omitted UCI.

For example, as illustrated in **Fig. 10**, the UE 100 may determine that multiplexing of UCI #1 (a first UCI) is to be omitted, due to its dedicated resources for transmission before multiplexing overlap with a non-active period of a Cell DRX. Accordingly, when determining the timeline conditions, according to the present variation, only UCls #2 and #3 are taken into account for determining the first symbol S₀.

That is, in the illustrated example, the first symbol S₀ is determined based on UCI #2. Using said first symbol S₀, the circuitry 120 checks for sufficiency of the processing time of the multiplexing, for example as described in 3GPP TS 38.213 V. 18.0.0, section 9.2.5 mentioned above. This approach may result in a more relaxed UE processing timeline.

It is noted that this variation may equally be applied to the second embodiment and/or the fifth embodiment.

### Second embodiment

According to a second embodiment, the UE 100 comprises a transceiver 110 and circuitry 120. The circuitry 120, in operation, when the UE 100 is configured with at least one discontinuous reception, DRX, including non-active periods, performs a first determination as to whether a first uplink control information, UCI, is to be multiplexed with at least one second UCI and/or on a physical uplink shared channel, PUSCH, to form a multiplexed signal. Further, depending on a result of the first determination, the circuitry 120 performs a second determination as to whether the first UCI is to be omitted before multiplexing, based on a timing relationship between resources dedicated to a transmission of the first UCI before multiplexing and the non-active periods. Then, the circuitry 120 performs the multiplexing to form the multiplexed signal according to results of the first determination and the second determination, and causes the transceiver 110 to transmit the multiplexed signal according to a result of the second determination.

In a second embodiment, the circuitry 120, in operation, determines, in the second determination, that the first UCI is to be omitted before multiplexing if all contents to be transmitted by the first UCI, the at least one second UCI and/or the PUSCH belong to a (first) predetermined group of contents.

In other words, the circuitry 120, in operation, may determine, in the second determination, that the first UCI is to be omitted if no contents to be transmitted by the at least one second UCI and/or the PUSCH belongs to a second predetermined group of contents. The second predetermined contents may include other contents than the contents included in above-mentioned (first) predetermined group of contents.

For example, the circuitry 120, in operation, determines, in the second determination, that the first UCI is not to be omitted before multiplexing if at least one content to be transmitted by the first UCI, the at least one second UCI and/or the PUSCH does not belong to the (first) predetermined group of contents.

In other words, the circuitry 120, in operation, determines, in the second determination, that the first UCI is not to be omitted if a content to be transmitted by the at least one second UCI and/or the PUSCH belongs to the second predetermined group of contents. The second predetermined contents may include other contents than the contents included in above-mentioned (first) predetermined group of contents.

For example, the (first) predetermined group of contents includes at least one of a scheduling request, SR, data to be transmitted on a configured grant, CG, PUSCH, and a periodic or semi-persistent CSI report.

For example, the second predetermined group of contents may include at least one of a sounding reference signal, SRS, for positioning, a hybrid automatic repeat request acknowledgement, HARQ-ACK, of a semi-persistent scheduling, SPS, physical downlink shared channel, PDSCH, a HARQ-ACK of a downlink control information, DCI, format without scheduling a PDSCH, an aperiodic channel state information, CSI, report on PUSCH, that temporally overlaps with a non-active period, an HARQ-ACK of dynamically scheduled PDSCH that temporally overlaps with a non-active period, and data scheduled for transmission on a dynamically scheduled PUSCH, that temporally overlaps with a non-active period.

That is, according to the second embodiment, after having determined that a first UCI is to be multiplexed with one or more second UCls and/or on a PUSCH, the first UCI is multiplexed with the one or more second UCls and/or on the PUSCH if any of the second UCI and/or the PUSCH would be transmitted even during the non-active period. In other words, multiplexing of the first UCI is not performed only if all of the second UCls and the PUSCH carries an SR, data to be transmitted on a configured grant, CG, PUSCH, or a periodic or semi-persistent CSI report.

With this approach, more UCls may be transmitted to the base station 200 without requiring the base station 200 to receive an additional transmission. Hence, the energy consumption of the base station 200 is not increased, since the base station 200 is required to be active and receive the multiplexed signal including second UCls and/or the PUSCH. Further, more UCls may be transmitted by the UE 100 to the base station 200, which may improve scheduling procedures performed by the base station 200.

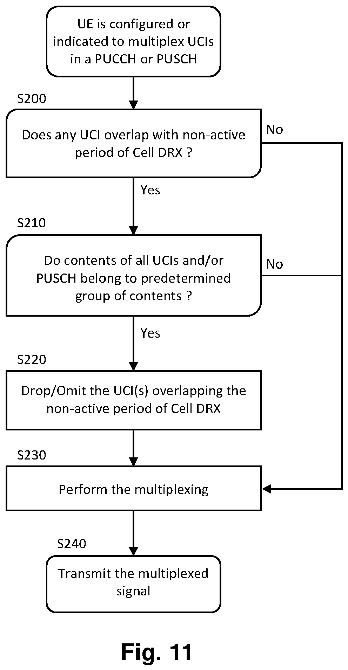

**Fig. 11** is a flowchart of a process performed by the UE 100 according to the second embodiment. As in the first embodiment, the UE 100 is configured or indicated that UCls are to be multiplexed in a PUCCH or a PUSCH. That is, a UCI is to be multiplexed with at least one other UCI and/or on a PUSCH. In Step S200, the circuitry 120 determines whether resources for transmission of any one of the UCls before multiplexing overlaps a non-active period. If so (Yes in step S210), it is determined whether all contents of the UCls and/or the PUSCH belong to the predetermined group of contents. If so (Yes in step S210), the UCI whose dedicated resources for transmission before multiplexing overlap the non-active period, is omitted/dropped before multiplexing in step S220. In the subsequent step S230, the multiplexing is performed without the first UCI whose resources for transmission before multiplexing overlap the non-active period. On the other hand, when it is determined that no resource of a UCI overlaps a non-active period in step S200 (No in step S200), said UCls are not dropped/omitted and included in the multiplexing process of step S230. Similarly, when it is determined in step S210 that at least one content of the UCls and/or the PUSCH does not belong to the predetermined group of contents (No in step S210), the UCI is not dropped/omitted and included in the multiplexing process of step S230. Subsequently, in step S240, the multiplexed signal resulting from the multiplexing procedure of step S230 is transmitted to a base station 200, for example.

### Third embodiment

In the third embodiment, the UE 100 comprises a transceiver 110 and circuitry 120. The circuitry 120, in operation, when the UE 100 is configured with at least one discontinuous reception, DRX, including non-active periods, performs a first determination as to whether a first uplink control information, UCI, is to be multiplexed with at least one second UCI and/or on a physical uplink shared channel, PUSCH, to form a multiplexed signal. Depending on a result of the first determination, the circuitry 120 performs a second determination as to whether transmission of the multiplexed signal is to be omitted, based on a timing relationship between resources dedicated to a transmission of the multiplexed signal and the non-active periods. The circuitry 120 performs the multiplexing to form the multiplexed signal according to results of the first determination and the second determination, and causes the transceiver 110 to transmit the multiplexed signal according to the result of the second determination

For example, the circuitry 120, in operation, determines, in the second determination, that the transmission of the multiplexed signal is to be omitted if the timing relationship between the resources dedicated to the transmission of the multiplexed signal indicates that said resources overlap with a non-active period.

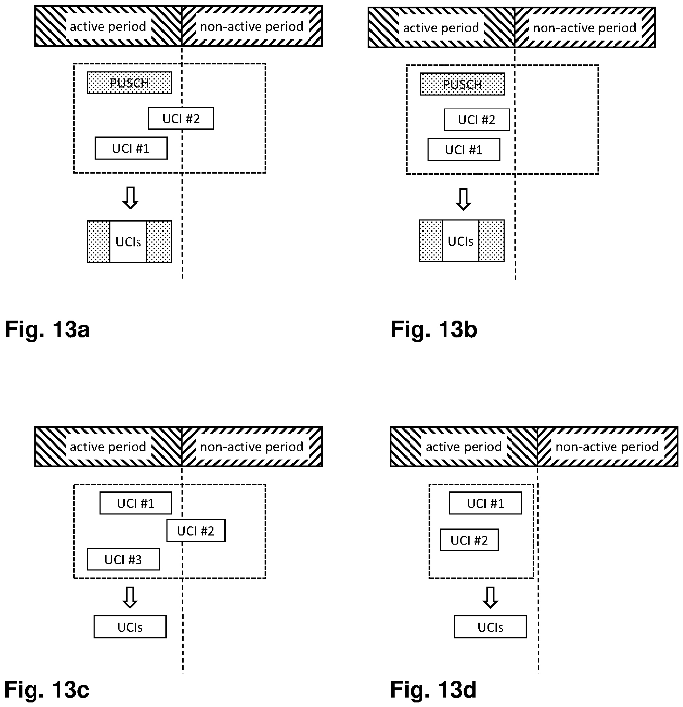

With this approach, less specification impact may be achieved and UE processing of UCI multiplexing may follow a legacy procedure. Further, more UCls may be kept and reported to the base station 200, as illustrated in Figs. 13a to 13d.

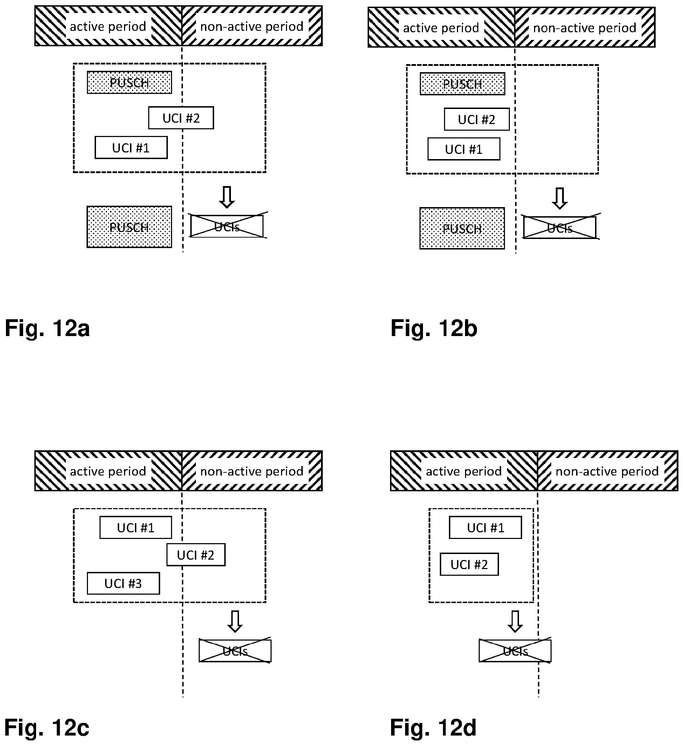

**Figs. 12a to 12d** illustrate exemplary situations where the transmission of a multiplexed signal is not performed in cases where a timing relationship between resources dedicated to the transmission of the multiplexed signal and non-active periods indicates that said resources overlap a non-active period of a Cell DRX.

For example, in **Fig. 12a**, UCI #1 is to be multiplexed with UCI #2, resulting in a multiplexed signal "UCIs". Resources dedicated for transmission of UCI #1 are entirely located within the active period, i.e. they do not overlap a non-active period. On the other hand, resources dedicated for transmission of UCI #2 overlap a non-active period. Since the resources dedicated for transmission of the multiplexed signal "UCls" overlap the non-active period, the multiplexed signal is not transmitted by the UE 100.

Further, as exemplarily illustrated in **Fig. 12b**, UCI #1 is to be multiplexed with UCI #2, resulting in a multiplexed signal "UCIs". Resources dedicated for transmission of UCI #1 are entirely located within the active period, i.e. they do not overlap a non-active period. Similarly, resources dedicated for transmission of UCI #2 are entirely located within the active period, i.e. they do not overlap a non-active period, as well. However, since the resources dedicated for transmission of the multiplexed signal "UCls" overlap the non-active period, the multiplexed signal is not transmitted by the UE 100.

Further, as exemplarily illustrated in **Fig. 12c**, three UCls #1 to #3 are to be multiplexed to form a multiplexed signal, wherein resources dedicated to transmission of UCls #1 and #3 before multiplexing do not overlap a non-active period, whereas resources dedicated to the transmission of UCI #2 before multiplexing overlap a non-active period. However, the UE 100 determines resources for transmission of the multiplexed signal (multiplexing of UCls #1 to #3) and determines that said resources overlap the non-active period. Therefore, the multiplexed signal resulting from multiplexing UCls #1 to #3 is not transmitted by the UE 100.

Further, as exemplarily illustrated in **Fig. 12d**, two UCls #1 and #2 are to be multiplexed to form a multiplexed signal, wherein resources dedicated to transmission of each of UCls #1 and #2 before multiplexing do not overlap a non-active period. However, the UE 100 determines resources for transmission of the multiplexed signal (multiplexing of UCls #1 and #2) and determines that said resources overlap the non-active period. Therefore, the multiplexed signal resulting from multiplexing UCls #1 and #2 is not transmitted by the UE 100.

**Figs. 13a and 13b** exemplarily illustrate situations where the transmission of a multiplexed signal is performed in cases where a timing relationship between resources dedicated to the transmission of the multiplexed signal and non-active periods indicates that said resources do not overlap a non-active period of a Cell DRX.

For example, in **Fig. 13a**, two UCls #1 and #2 are to be multiplexed on a PUSCH, wherein resources dedicated to the transmission of UCI #1 before multiplexing do not overlap a non-active period, whereas resources dedicated to a transmission of UCI #2 before multiplexing overlap the non-active period. However, after multiplexing of UCls #1 and #2 on the PUSCH, which results in a multiplexed signal, resources dedicated for transmission of the multiplexed signal do not overlap the non-active period. Hence, the multiplexed signal is transmitted by the UE 100. That is, transmission of the multiplexed signal is determined not to be omitted.

Further, as exemplarily illustrated in **Fig. 13b**, two UCls #1 and #2 are to be multiplexed on a PUSCH, wherein resources dedicated to the transmission of each UCI #1 and #2 before multiplexing do not overlap a non-active period. However, after multiplexing of UCls #1 and #2 on the PUSCH, which results in a multiplexed signal, resources dedicated for transmission of the multiplexed signal do not overlap the non-active period. Hence, the multiplexed signal is transmitted by the UE 100. That is, transmission of the multiplexed signal is determined not to be omitted.

Further, as exemplarily illustrated in **Fig. 13c**, three UCls #1 to #3 are to be multiplexed, wherein resources dedicated to the transmission of UCls #1 and #3 before multiplexing do not overlap a non-active period, whereas resources dedicated to a transmission of UCI #2 before multiplexing overlap the non-active period. However, after multiplexing of UCls #1 to #3, which results in a multiplexed signal, resources dedicated for transmission of the multiplexed signal do not overlap the non-active period. Hence, the multiplexed signal is transmitted by the UE 100. That is, transmission of the multiplexed signal is determined not to be omitted.

Further, as exemplarily illustrated in **Fig. 13d**, two UCls #1 and #2 are to be multiplexed, wherein resources dedicated to the transmission of each UCI #1 and #2 before multiplexing do not overlap a non-active period. However, after multiplexing of UCls #1 and #2, which results in a multiplexed signal, resources dedicated for transmission of the multiplexed signal do not overlap the non-active period. Hence, the multiplexed signal is transmitted by the UE 100. That is, transmission of the multiplexed signal is determined not to be omitted.

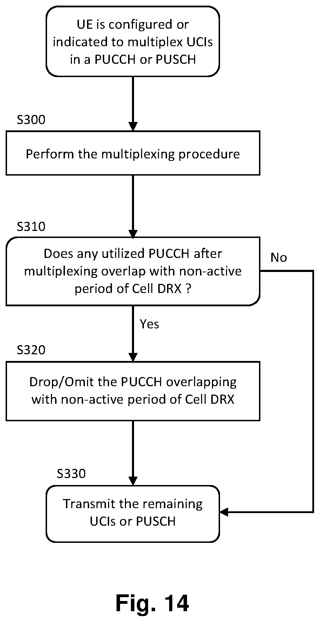

**Fig. 14** is a flowchart illustrating a process according to the third embodiment. As in the first and second embodiments, the UE 100 is configured with or indicated that UCls are to be multiplexed in a PUCCH or a PUSCH. That is, a UCI is to be multiplexed with at least one other UCI and/or on a PUSCH. In step S300, the circuitry 120 performs the multiplexing of the UCI(s) and/or on the PUSCH. In step S310, it is determined whether resources dedicated to the transmission of the multiplexed signal overlap with a non-active period of a Cell DRX. That is, it is determines whether a timing relationship between resources dedicated to the transmission of the multiplexed signal and the non-active periods indicates that said resources overlap a non-active period. If so (Yes in Step S310), the transmission of the multiplexed signal is determined not to be performed. That is, the multiplexed signal whose resources for transmission overlap the non-active period is not transmitted in the subsequent step S330. On the other hand, if the timing relationship between resources dedicated to the transmission of the multiplexed signal and the non-active periods of the Cell DRX indicates that said resources do not overlap a non-active period (No in Step S310), the multiplexed signal is transmitted in step S330.

### Fourth embodiment

In the fourth embodiment, the UE 100 comprises a transceiver 110 and circuitry 120. The circuitry 120, in operation, when the UE 100 is configured with at least one discontinuous reception, DRX, including non-active periods, performs a first determination as to whether a first uplink control information, UCI, is to be multiplexed with at least one second UCI and/or on a physical uplink shared channel, PUSCH, to form a multiplexed signal. Depending on a result of the first determination, the circuitry 120 performs a second determination as to whether transmission of the multiplexed signal is to be omitted, based on a timing relationship between resources dedicated to a transmission of the multiplexed signal and the non-active periods. The circuitry 120 performs the multiplexing to form the multiplexed signal according to results of the first determination and the second determination, and causes the transceiver 110 to transmit the multiplexed signal according to the result of the second determination

Further, the circuitry 120, in operation, determines, in the second determination, that the transmission of the multiplexed signal is to be omitted if all contents to be transmitted by the first UCI, the at least one second UCI and/or the PUSCH belong to a predetermined group of contents.

For example, the circuitry 120, in operation, determines, in the second determination, that transmission of the multiplexed signal is not to be omitted if at least one content to be transmitted by the first UCI, the at least one second UCI and/or the PUSCH does not belong to the predetermined group of contents

For example, the predetermined group of contents includes at least one of a scheduling request, SR, data to be transmitted on a configured grant, CG, PUSCH, a periodic or semi-persistent CSI report.

According to the fourth embodiment, when UCls are to be multiplexed with each other and/or on a PUSCH to form a multiplexed signal, dropping/omitting of transmission of a multiplexed signal is performed by the UE 100 after multiplexing if all contents of the multiplexed signal belong to a certain group of contents, e.g. the predetermined group of contents, and the resources dedicated to the transmission of the multiplexed signal overlap a non-active period of a Cell DRX. In other words, if at least one content of the multiplexed signal does not belong to the predetermined group of contents, the multiplexed signal is transmitted, even though its dedicated resources for transmission overlap a non-active period of the Cell DRX.

This approach may allow for more UCls to be transmitted by the UE 100 to a base station 200, which may facilitate scheduling performed by the base station 200. Further, since the base station 200 were to receive a multiplexed signal including a content not included in the predetermined group of contents in any case, the transmission of the multiplexed signal including a UCI of content included in the predetermined group of contents does not cause further energy consumption. Further, this approach may allow for less specification impact and UE processing of UCI multiplexing, which may potentially follow a legacy procedure.

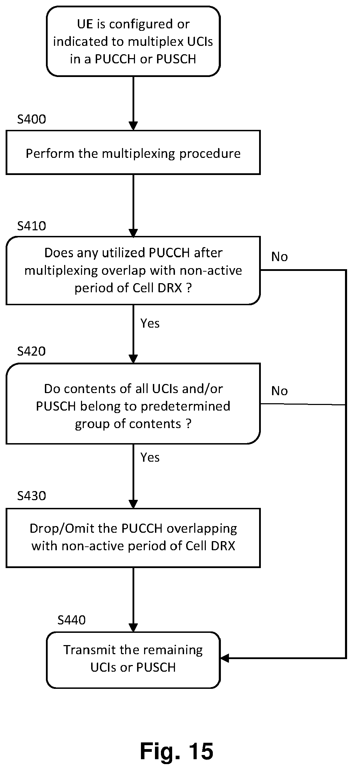

**Fig. 15** is a flowchart illustrating a process performed by a UE 100 according to the fourth embodiment. As in the first through third embodiments, the UE 100 is configured or indicated that UCls are to be multiplexed in a PUCCH or a PUSCH. That is, a UCI is to be multiplexed with at least one other UCI and/or on a PUSCH. In step S400, the circuitry 120 performs the multiplexing of the UCI(s) and/or on the PUSCH. In step 410, it is determined whether resources dedicated to the transmission of the multiplexed signal overlaps with a non-active period of a Cell DRX. That is, it is determines whether a timing relationship between resources dedicated to the transmission of the multiplexed signal and the non-active periods indicates that said resources overlap a non-active period. If so (Yes in Step S410), it is determined in step S420 whether all contents of the multiplexed signal belong to the predetermined group of contents. In other words, it is determined whether any content of the multiplexed signal does not belong to the predetermined group of contents. If all contents belong to the predetermined group of contents (Yes in step S420), the transmission of the multiplexed signal is determined not to be performed. That is, the multiplexed signal whose resources for transmission overlap the non-active period is not transmitted in the subsequent step S440. On the other hand, if the timing relationship between resources dedicated to the transmission of the multiplexed signal and the non-active periods of the Cell DRX indicates that said resources do not overlap a non-active period (No in Step S410), or if not all contents of the multiplexed signal belongs to the predetermined group of contents (No in step S420), the multiplexed signal is transmitted in step S330.

### Fifth embodiment

According to a fifth embodiment, the UE 100 comprises a transceiver 110 and circuitry 120. The circuitry 120, in operation, when the UE 100 is configured with at least one discontinuous reception, DRX, including non-active periods, performs a first determination as to whether a first uplink control information, UCI, is to be multiplexed with at least one second UCI and/or on a physical uplink shared channel, PUSCH, to form a multiplexed signal. Depending on a result of the first determination, the circuitry 120 performs a second determination as to whether the first UCI is to be omitted before multiplexing, or as to whether transmission of the multiplexed signal is to be omitted, based on at least one of a timing relationship between resources dedicated to a transmission of the first UCI before multiplexing and the non-active periods, and a timing relationship between resources dedicated to a transmission of the multiplexed signal and the non-active periods. Further, the circuitry 120 performs the multiplexing to form the multiplexed signal according to results of the first determination and the second determination and causes the transceiver 110 to transmit the multiplexed signal according to the result of the second determination.

The UE 100 is configured with a first DRX including first non-active periods and a second DRX including second non-active periods. The non-active periods include the first non-active periods and the second non-active periods, or the second non-active periods only.

That is, for the second determination, either the first non-active periods of the first DRX and the non-active periods of the second DRX or the non-active periods of the second DRX only are taken into account.

For example, the first DRX may be a cell DRX. For example, the second DRX may be a cell DRX or a connected mode DRX, C-DRX.

In other words, when the UE 100 is configured with bot a C-DRX and a Cell DRX, whether dropping/omitting of the first UCI or the transmission of the multiplexed signal is determined based either on the non-active periods of both DRX configurations (C-DRX and Cell DRX) or based on the C-DRX configuration only.

This may allow for more flexibility to control whether or when an uplink transmission is to be kept or transmitted by using a C-DRX timer and dynamic extensions. Therefore, ambiguous behavior around a boundary of a non-active period may be prevented.

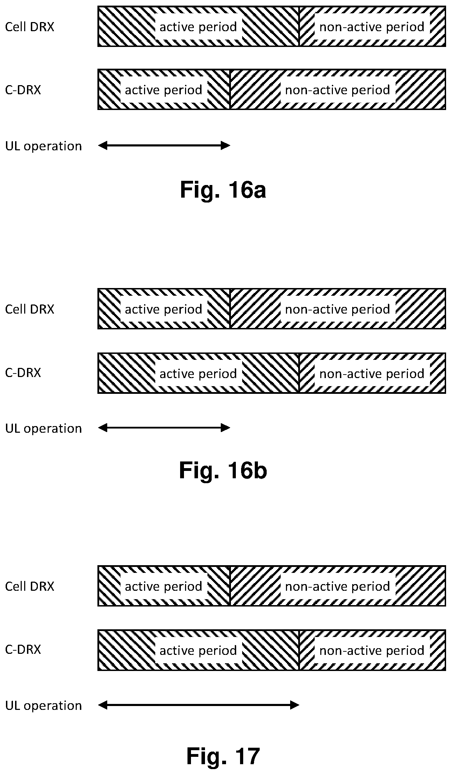

This approach is further illustrated in Figs. 16a, 16b and 17.

**Figs. 16a and 16b** illustrate situations where the UE 100 is configured with a Cell DRX and a C-DRX, exhibiting respective active periods and non-active periods. For the determination as to whether a first UCI is to be omitted before multiplexing, or as to whether transmission of the multiplexed signal is to be omitted based on a timing relationship involving the non-active periods, said non-active periods include the non-active periods of the Cell DRX as well as the non-active periods of the C-DRX. That is, as illustrated in Fig. 16a, when the non-active period of the C-DRX entirely spans the non-active period of the Cell DRX, the non-active periods used for the determination correspond to the periods of the non-active period of the C-DRX. On the other hand, as illustrated in Fig. 16b, when the non-active period of the Cell DRX entirely spans the non-active period of the C-DRX, the non-active periods used for the determination corresponds to the period of the non-active period of the Cell DRX. In other words, the non-active periods for above-mentioned determination is formed by the union of the non-active periods of the Cell DRX and the C-DRX. That is, an uplink operation is performed by the UE 100 during the period indicated by the arrow.

On the other hand, **Fig. 17** illustrates a situation where the UE 100 is configured with a Cell DRX and a C-DRX, exhibiting respective active periods and non-active periods, but the non-active period to be used for above-mentioned determination is formed solely by the non-active period of the C-DRX. That is, an uplink operation is performed by the UE 100 during the period indicated by the arrow.

It is noted that the aspect of the fifth embodiment, i.e. the determination of the non-active periods to be used for the determination of the timing relationships, may be applied to each of the first through fourth embodiment and their variations.

Further, it is noted that the Cell DRX and the C-DRX are mere examples of a first and a second DRX, and the disclosure is not limited thereto. The first and second DRX may each respectively be an Idle Mode DRX, a Cell DRX, or a C-DRX, or the like.

### Variations

In all embodiments, wherein the UE 100 determines whether a UCI is to be omitted, it may be implemented that the UE 100 decides on its own whether the UCI is to be omitted before multiplexing, and/or whether the multiplexed signal is to be transmitted. That is, the circuitry 120, in operation, may perform the second determination as to whether the first UCI is to be omitted before multiplexing, or as to whether transmission of the multiplexed signal is to be omitted according to its implementation.

Hence, the base station 200 may either choose not to receive or try to receive the multiplexed signal by multiple blind detections of different possibilities for transmission of the multiplexed signal, during non-active periods of the UE 100.

Further, in all embodiments, in the case of repetitions of a PUCCH and/or PUSCH over multiple slots, the parts overlapping a non-active period of a Cell DRX may be omitted, and/or repetitions of PUCCH and/or PUSCH may be omitted when overlapping a non-active period of the Cell DRX. In addition or alternatively, all repetitions may be omitted.

Still further, it is noted that aspects described above with reference to any of the first through fifth embodiment may be appropriately combined with each other. For example, the non-active periods used for performing the second determination in the first through fourth embodiments may be non-active periods of one or more of multiple DRX non-active periods, as described with respect to the fifth embodiment.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a user equipment, UE, is provided. The UE comprises a transceiver and circuitry. The circuitry, in operation, when the UE is configured with at least one discontinuous reception, DRX, including non-active periods, performs a first determination as to whether a first uplink control information, UCI, is to be multiplexed with at least one second UCI and/or on a physical uplink shared channel, PUSCH, to form a multiplexed signal. Depending on a result of the first determination, the circuitry performs a second determination as to whether the first UCI is to be omitted before multiplexing, or as to whether transmission of the multiplexed signal is to be omitted, based on at least one of a timing relationship between resources dedicated to a transmission of the first UCI before multiplexing and the non-active periods, and a timing relationship between resources dedicated to a transmission of the multiplexed signal and the non-active periods. Further, the circuitry performs the multiplexing to form the multiplexed signal according to results of the first determination and the second determination, and causes the transceiver to transmit the multiplexed signal according to the result of the second determination.

In other words, according to the first aspect, provided is a user equipment, UE, comprising a transceiver and circuitry. The circuitry, in operation, when the UE is configured with at least one discontinuous reception, DRX, including non-active periods, performs a first determination as to whether a first uplink control information, UCI, is to be multiplexed with at least one second UCI and/or on a physical uplink shared channel, PUSCH, to form a multiplexed signal. Depending on a result of the first determination, the circuitry performs a second determination as to whether multiplexing of the first UCI with the at least one second UCI and/or on the PUSCH is to be omitted, or as to whether transmission of the multiplexed signal is to be omitted, based on at least one of a timing relationship between resources dedicated to a transmission of the first UCI before multiplexing and the non-active periods, and a timing relationship between resources dedicated to a transmission of the multiplexed signal and the non-active periods, and causes the transceiver to transmit the multiplexed signal according to a result of the second determination.

According to a second aspect, provided is a UE according to the first aspect, wherein the circuitry, in operation, performs the second determination if, as the result of the first determination, the first UCI is to be multiplexed with the at least one second UCI and/or on the PUSCH to form the multiplexed signal.

According to a third aspect, provided is a UE according to the first or second aspect, wherein the circuitry, in operation, determines, in the second determination, that the first UCI is to be omitted before multiplexing if the timing relationship between the resources dedicated to the transmission of the first UCI before multiplexing indicates that said resources overlap with a non-active period.

In other words, according to the third aspect, provided is a UE according to the first or second aspect, wherein the circuitry, in operation, determines, in the second determination, that the multiplexing of the first UCI with the at least one second UCI and/or on the PUSCH is to be omitted if the timing relationship between the resources dedicated to the transmission of the first UCI before multiplexing indicates that said resources overlap with a non-active period.

According to a fourth aspect, provided is a UE according to the first or second aspect, wherein the circuitry, in operation, determines, in the second determination, that the first UCI is to be omitted before multiplexing if all contents to be transmitted by the first UCI, the at least one second UCI and/or the PUSCH belong to a predetermined group of contents.

In other words, according to the fourth aspect, provided is a UE according to the first or second aspect, wherein the circuitry, in operation, determines, in the second determination, that the multiplexing of the first UCI with the at least one second UCI and/or on the PUSCH is to be omitted if all contents to be transmitted by the first UCI, the at least one second UCI and/or the PUSCH belong to a predetermined group of contents.

According to a fifth aspect, provided is a UE according to the fourth aspect, wherein the circuitry, in operation, determines, in the second determination, that the first UCI is not to be omitted before multiplexing if at least one content to be transmitted by the first UCI, the at least one second UCI and/or the PUSCH does not belong to the predetermined group of contents.

In other words, according to the fifth aspect, provided is a UE according to the fourth aspect, wherein the circuitry, in operation, determines, in the second determination, that the multiplexing of the first UCI with the at least one second UCI and/or on the PUSCH is not to be omitted if at least one content to be transmitted by the first UCI, the at least one second UCI and/or the PUSCH does not belong to the predetermined group of contents.

According to a sixth aspect, provided is a UE according to any one of the third to fifth aspect, wherein if the circuitry determines that the first UCI is to be omitted before multiplexing, the circuitry, in operation, determines a first symbol of an earliest physical uplink control channel, PUCCH, or PUSCH after omitting of the first UCI, and further checks if a processing time of the multiplexing is sufficient by using the first symbol as a reference.

In other words, according to the sixth aspect, provided is a UE according to any one of the third to fifth aspect, wherein if the circuitry determines that multiplexing of the first UCI with the at least one second UCI and/or on the PUSCH is to be omitted, the circuitry, in operation, determines a first symbol of an earliest physical uplink control channel, PUCCH, or PUSCH after omitting of the first UCI, and further checks if a processing time of the multiplexing is sufficient by using the first symbol as a reference.

According to a seventh aspect, provided is a UE according to the first or second aspect, wherein the circuitry, in operation, determines, in the second determination, that transmission of the multiplexed signal is to be omitted if all contents to be transmitted by the first UCI, the at least one second UCI and/or the PUSCH belong to a predetermined group of contents.

According to an eighth aspect, provided is a UE according to the seventh aspect, wherein the circuitry, in operation, determines, in the second determination, that transmission of the multiplexed signal is not to be omitted if at least one content to be transmitted by the first UCI, the at least one second UCI and/or the PUSCH does not belong to the predetermined group of contents.

According to a ninth aspect, provided is a UE according to any one of the fifth to eighth aspect, wherein the predetermined group of contents includes at least one of a scheduling request, SR, data to be transmitted on a configured grant, CG, PUSCH, and a periodic or semi-persistent CSI report.

According to a tenth aspect, provided is a UE according to the first or second aspect, wherein the circuitry, in operation, determines, in the second determination, that the transmission of the multiplexed signal is to be omitted if the timing relationship between the resources dedicated to the transmission of the multiplexed signal indicates that said resources overlap with a non-active period.

According to an eleventh aspect, provided is a UE according to any one of the first to tenth aspect, wherein the at least one DRX is a cell DRX.

According to a twelfth aspect, provided is a UE according to any one of the first to tenth aspect, wherein the UE is configured with a first DRX including first non-active periods and a second DRX including second non-active periods; and the non-active periods include the first non-active periods and the second non-active periods, or the second non-active periods only.

According to a thirteenth aspect, provided is a UE according to the twelfth aspect, wherein the first DRX is a cell DRX.

According to a fourteenth aspect, provided is a UE according to the twelfth or thirteenth aspect, wherein the second DRX is a cell DRX or a connected mode DRX, C-DRX.

According to a fifteenth aspect, provided is a method for a user equipment, UE, comprising when the UE is configured with at least one discontinuous reception, DRX, including non-active periods, performing a first determination as to whether a first uplink control information, UCI, is to be multiplexed with at least one second UCI and/or on a physical uplink shared channel, PUSCH, to form a multiplexed signal. The method further comprises, depending on a result of the first determination, performing a second determination as to whether the first UCI is to be omitted before multiplexing, or as to whether transmission of the multiplexed signal is to be omitted, based on at least one of a timing relationship between resources dedicated to a transmission of the first UCI before multiplexing and the non-active periods, and a timing relationship between resources dedicated to a transmission of the multiplexed signal and the non-active periods. The method further comprises performing the multiplexing to form the multiplexed signal according to results of the first determination and the second determination, and transmitting the multiplexed signal according to the result of the second determination

In other words, according to the fifteenth aspect, provided is a method for a user equipment, UE. The method comprises, when the UE is configured with at least one discontinuous reception, DRX, including non-active periods, performing a first determination as to whether a first uplink control information, UCI, is to be multiplexed with at least one second UCI and/or on a physical uplink shared channel, PUSCH, to form a multiplexed signal. The method further comprises, depending on a result of the first determination, performing a second determination as to whether multiplexing of the first UCI with the at least one second UCI and/or on the PUSCH is to be omitted, or as to whether transmission of the multiplexed signal is to be omitted, based on at least one of a timing relationship between resources dedicated to a transmission of the first UCI before multiplexing and the non-active periods, and a timing relationship between resources dedicated to a transmission of the multiplexed signal and the non-active periods, and transmitting the multiplexed signal according to a result of the second determination.

According to a sixteenth aspect, provided is a method according to the fifteenth aspect, wherein the method comprises performing the second determination if, as the result of the first determination, the first UCI is to be multiplexed with the at least one second UCI and/or on the PUSCH to form the multiplexed signal.

According to a seventeenth aspect, provided is a method according to the fifteenth or sixteenth aspect, wherein it is determined, in the second determination, that the first UCI is to be omitted before multiplexing if the timing relationship between the resources dedicated to the transmission of the first UCI before multiplexing indicates that said resources overlap with a non-active period.

In other words, according to the seventeenth aspect, provided is a method according to the fifteenth or sixteenth aspect, wherein it is determined, in the second determination, that the multiplexing of the first UCI with the at least one second UCI and/or on the PUSCH is to be omitted if the timing relationship between the resources dedicated to the transmission of the first UCI before multiplexing indicates that said resources overlap with a non-active period.

According to a eighteenth aspect, provided is a method according to the fifteenth or sixteenth aspect, wherein it is determined, in the second determination, that the first UCI is to be omitted before multiplexing if all contents to be transmitted by the first UCI, the at least one second UCI and/or the PUSCH belong to a predetermined group of contents.

In other words, according to the eighteenth aspect, provided is a method according to the fifteenth or sixteenth aspect, wherein it is determined, in the second determination, that the multiplexing of the first UCI with the at least one second UCI and/or on the PUSCH is to be omitted if all contents to be transmitted by the first UCI, the at least one second UCI and/or the PUSCH belong to a predetermined group of contents.

According to a nineteenth aspect, provided is a method according to the eighteenth aspect, wherein it is determined, in the second determination, that the first UCI is not to be omitted before multiplexing if at least one content to be transmitted by the first UCI, the at least one second UCI and/or the PUSCH does not belong to the predetermined group of contents.

In other words, according to the nineteenth aspect, provided is a method according to the eighteenth aspect, wherein it is determined, in the second determination, that the multiplexing of the first UCI with the at least one second UCI and/or on the PUSCH is not to be omitted if at least one content to be transmitted by the first UCI, the at least one second UCI and/or the PUSCH does not belong to the predetermined group of contents.

According to a twentieth aspect, provided is a method according to any one of the seventeenth to nineteenth aspect, wherein if it is determined that the first UCI is to be omitted before multiplexing, a first symbol of an earliest physical uplink control channel, PUCCH, or PUSCH after omitting of the first UCI is determined, and it is further checked if a processing time of the multiplexing is sufficient by using the first symbol as a reference.

In other words, according to the twentieth aspect, provided is a method according to any one of the seventeenth to nineteenth aspect, wherein if it is determined that multiplexing of the first UCI with the at least one second UCI and/or on the PUSCH is to be omitted, a first symbol of an earliest physical uplink control channel, PUCCH, or PUSCH after omitting of the first UCI is determined, and it is further checked if a processing time of the multiplexing is sufficient by using the first symbol as a reference.

According to a twenty-first aspect, provided is a method according to the fifteenth or sixteenth aspect, wherein it is determined, in the second determination, that transmission of the multiplexed signal is to be omitted if all contents to be transmitted by the first UCI, the at least one second UCI and/or the PUSCH belong to a predetermined group of contents.

According to an twenty-second aspect, provided is a method according to the twenty-first aspect, wherein it is determined, in the second determination, that transmission of the multiplexed signal is not to be omitted if at least one content to be transmitted by the first UCI, the at least one second UCI and/or the PUSCH does not belong to the predetermined group of contents.

According to a twenty-third aspect, provided is a method according to any one of the nineteenth to twenty-second aspect, wherein the predetermined group of contents includes at least one of a scheduling request, SR, data to be transmitted on a configured grant, CG, PUSCH, and a periodic or semi-persistent CSI report.

According to a twenty-fourth aspect, provided is a method according to the fifteenth or sixteenth aspect, wherein it is determined, in the second determination, that the transmission of the multiplexed signal is to be omitted if the timing relationship between the resources dedicated to the transmission of the multiplexed signal indicates that said resources overlap with a non-active period.

According to a twenty-fifth aspect, provided is a method according to any one of the fifteenth to twenty-fourth aspect, wherein the at least one DRX is a cell DRX.

According to a twenty-sixth aspect, provided is a method according to any one of the fifteenth to twenty-fourth aspect, wherein the UE is configured with a first DRX including first non-active periods and a second DRX including second non-active periods; and the non-active periods include the first non-active periods and the second non-active periods, or the second non-active periods only.

According to a twenty-seventh aspect, provided is a method according to the twenty-sixth aspect, wherein the first DRX is a cell DRX.

According to a twenty-eighth aspect, provided is a method according to the twenty-sixth or twenty-seventh aspect, wherein the second DRX is a cell DRX or a connected mode DRX, C-DRX.

Summarizing, provided is a user equipment, UE, comprising a transceiver and circuitry. The circuitry, in operation, when the UE is configured with at least one discontinuous reception, DRX, including non-active periods, performs a first determination as to whether a first uplink control information, UCI, is to be multiplexed with at least one second UCI and/or on a physical uplink shared channel, PUSCH, to form a multiplexed signal. Depending on a result of the first determination, the circuitry performs a second determination as to whether the first UCI is to be omitted before multiplexing, or as to whether transmission of the multiplexed signal is to be omitted, based on at least one of a timing relationship between resources dedicated to a transmission of the first UCI before multiplexing and the non-active periods, and a timing relationship between resources dedicated to a transmission of the multiplexed signal and the non-active periods. The circuitry further performs the multiplexing to form the multiplexed signal according to results of the first determination and the second determination, and causes the transceiver to transmit the multiplexed signal according to the result of the second determination.

## Claims

1. A user equipment, UE, comprising:
a transceiver; and
circuitry which, in operation, when the UE is configured with at least one discontinuous reception, DRX, including non-active periods,
performs a first determination as to whether a first uplink control information, UCI, is to be multiplexed with at least one second UCI and/or on a physical uplink shared channel, PUSCH, to form a multiplexed signal;
depending on a result of the first determination, performs a second determination as to whether the first UCI is to be omitted before multiplexing, or as to whether transmission of the multiplexed signal is to be omitted, based on at least one of
- a timing relationship between resources dedicated to a transmission of the first UCI before multiplexing and the non-active periods, and
- a timing relationship between resources dedicated to a transmission of the multiplexed signal and the non-active periods;
performs the multiplexing to form the multiplexed signal according to results of the first determination and the second determination; and
causes the transceiver to transmit the multiplexed signal according to the result of the second determination.

2. The UE according to claim 1, wherein
the circuitry, in operation, performs the second determination if, as the result of the first determination, the first UCI is to be multiplexed with the at least one second UCI and/or on the PUSCH to form the multiplexed signal.

3. The UE according to claim 1 or 2, wherein
the circuitry, in operation, determines, in the second determination, that the first UCI is to be omitted before multiplexing if the timing relationship between the resources dedicated to the transmission of the first UCI before multiplexing indicates that said resources overlap with a non-active period.

4. The UE according to claim 1 or 2, wherein
the circuitry, in operation, determines, in the second determination, that the first UCI is to be omitted before multiplexing if all contents to be transmitted by the first UCI, the at least one second UCI and/or the PUSCH belong to a predetermined group of contents.

5. The UE according to claim 4, wherein
the circuitry, in operation, determines, in the second determination, that the first UCI is not to be omitted before multiplexing if at least one content to be transmitted by the first UCI, the at least one second UCI and/or the PUSCH does not belong to the predetermined group of contents.

6. The UE according to any one of claims 3 to 5, wherein
if the circuitry determines that the first UCI is to be omitted before multiplexing, the circuitry, in operation, determines a first symbol of an earliest physical uplink control channel, PUCCH, or PUSCH after omitting of the first UCI, and further checks if a processing time of the multiplexing is sufficient by using the first symbol as a reference.

7. The UE according to claim 1 or 2, wherein
the circuitry, in operation, determines, in the second determination, that transmission of the multiplexed signal is to be omitted if all contents to be transmitted by the first UCI, the at least one second UCI and/or the PUSCH belong to a predetermined group of contents.

8. The UE according to claim 7, wherein
the circuitry, in operation, determines, in the second determination, that transmission of the multiplexed signal is not to be omitted if at least one content to be transmitted by the first UCI, the at least one second UCI and/or the PUSCH does not belong to the predetermined group of contents.

9. The UE according to any one of claims 5 to 8, wherein
the predetermined group of contents includes at least one of
- a scheduling request, SR,
- data to be transmitted on a configured grant, CG, PUSCH, and
- a periodic or semi-persistent CSI report.

10. The UE according to claim 1 or 2, wherein
the circuitry, in operation, determines, in the second determination, that the transmission of the multiplexed signal is to be omitted if the timing relationship between the resources dedicated to the transmission of the multiplexed signal indicates that said resources overlap with a non-active period.

11. The UE according to any one of claims 1 to 10, wherein
the at least one DRX is a cell DRX.

12. The UE according to any one of claims 1 to 10, wherein
the UE is configured with a first DRX including first non-active periods and a second DRX including second non-active periods; and
the non-active periods include
- the first non-active periods and the second non-active periods, or
- the second non-active periods only.

13. The UE according to claim 12, wherein
the first DRX is a Cell DRX.

14. The UE according to claim 12 or 13, wherein
the second DRX is a Cell DRX or a connected mode DRX, C-DRX.

15. A method for a user equipment, UE, comprising
when the UE is configured with at least one discontinuous reception, DRX, including non-active periods,
performing a first determination as to whether a first uplink control information, UCI, is to be multiplexed with at least one second UCI and/or on a physical uplink shared channel, PUSCH, to form a multiplexed signal;
depending on a result of the first determination, performing a second determination as to whether the first UCI is to be omitted before multiplexing, or as to whether transmission of the multiplexed signal is to be omitted, based on at least one of
- a timing relationship between resources dedicated to a transmission of the first UCI before multiplexing and the non-active periods, and
- a timing relationship between resources dedicated to a transmission of the multiplexed signal and the non-active periods;
performing the multiplexing to form the multiplexed signal according to results of the first determination and the second determination; and
transmitting the multiplexed signal according to the result of the second determination.
